# EUROPÄISCHE PATENTSCHRIFT

(11) **EP 1 639 245 B1**
(45) Veröffentlichungstag und Bekanntmachung des Hinweises auf die Patenterteilung: **26.09.2007**
(21) Anmeldenummer: 04740248.2
(22) Anmeldetag: 24.06.2004
(51) Int. Cl.: F02B 37/22, F01D 17/14, F01N 3/08

(54) **BRENNKRAFTMASCHINE MIT EINEM VERDICHTER IM ANSAUGTRAKT UND VERFAHREN HIERZU**
INTERNAL COMBUSTION ENGINE COMPRISING A COMPRESSOR IN THE SUCTION PART AND METHOD THEREFOR
MOTEUR A COMBUSTION INTERNE COMPORTANT UN COMPRESSEUR DANS LA PIPE D'ADMISSION ET PROCEDE CORRESPONDANT

(30) Priorität: 27.06.2003 DE 10329019
(43) Veröffentlichungstag der Anmeldung: 29.03.2006
(73) Patentinhaber: DaimlerChrysler AG, 70327 Stuttgart (DE)
(72) Erfinder: SUMSER, Siegfried, 70327 Stuttgart (DE)
(86) Internationale Anmeldenummer: PCT/EP2004/006834
(87) Internationale Veröffentlichungsnummer: WO 2005/001257

(56) Entgegenhaltungen:
- WO-A-03/048533
- DE-A- 10 049 198
- DE-A- 10 252 767
- DE-C- 19 955 508

## Beschreibung

Die Erfindung bezieht sich auf eine Brennkraftmaschine mit einem Verdichter im Ansaugtrakt nach dem Oberbegriff des Anspruches 1 und auf ein Verfahren zum Betrieb einer derartigen Brennkraftmaschine.

Aus der gattungsbildenden DE 100 49 198 A1 ist eine Brennkraftmaschine bekannt mit einem Verdichter im Ansaugtrakt, mit einem in einem Verdichtereinlasskanal drehbar gelagerten Verdichterrad, über das zugeführte Verbrennungsluft auf einen erhöhten Ladedruck komprimierbar ist, und mit einem Zusatzkanal, der in den Verdichtereinlasskanal einmündet, wobei im Verdichtereinlasskanal stromauf des Verdichterrades ein einstellbare Sperrorgan und im Mündungsbereich des Zusatzkanals in den Verdichterkanal eine einstellbare Drallrichtung angeordnet ist. Dadurch kann der Querschnitt des Verdichtereinlasskanals variabel eingestellt werden, wodurch das Betriebsverhalten des Verdichters in gezielter Weise manipuliert werden kann. Beispielsweise ist es möglich, die Strömungsgeschwindigkeit und den Drall der zugeführten Verbrennungsluft zu manipulieren. Dazu ist eine Regel-und Steuereinheit vorgesehen. Vorrichtungen zur Abgasnachbehandlung in Form eines NOₓ-Speicher-Katalysators werden nicht genannt.

Aus der Druckschrift DE 199 55 508 C1 ist weiterhin eine aufgeladene Brennkraftmaschine mit einem Abgasturbolader bekannt, welcher eine Abgasturbine im Abgasstrang sowie einen Verdichter im Ansaugtrakt der Brennkraftmaschine umfasst. Das Turbinenrad der Abgasturbine wird von den unter Druck stehenden Abgasen angetrieben, wobei die Radrotation über eine Welle auf das Verdichterrad übertragen wird, das aus der Atmosphäre herangeführte Verbrennungsluft auf einen erhöhten Ladedruck verdichtet. Das Verdichterrad ist in einem Verdichtereinlasskanal drehbar gelagert, über den die Verbrennungsluft stirnseitig dem Verdichterrad zugeführt wird. Parallel zum Verdichtereinlasskanal ist im Verdichter ein Zusatzkanal ausgebildet, der etwa in Höhe des Verdichterrades radial in den Verdichtereinlasskanal einmündet und über den in bestimmten Betriebssituationen zusätzliche Verbrennungsluft radial auf die Verdichterradschaufeln zuführbar ist. Im Mündungsbereich des Zusatzkanals zum Verdichtereinlasskanal ist ein verstellbares Drallgitter angeordnet, welches für einen antreibenden Drall der durchströmenden und auf das Verdichterrad auftreffenden Zusatzluft sorgt. Über eine Drosselklappe im axialen Verdichtereinlasskanal kann die zuzuführende Luftmenge eingestellt werden.

Mithilfe dieser Vorrichtung kann ein so genannter Kaltluft-Turbinenbetrieb des Verdichters realisiert werden, bei dem bei niedrigen Lasten und Drehzahlen der Brennkraftmaschine im Ansaugtrakt stromab des Verdichters ein Unterdruck herrscht, der zu einem Druckgefälle über dem Verdichterrad führt, welches zu einem Antrieb des Verdichterrades genutzt werden kann. In diesen Betriebssituationen erfolgt die Zufuhr von Verbrennungsluft über den radial einmündenden Zusatzkanal, wobei der hierbei entstehende Drall zu einer verbesserten Antriebswirkung auf das Verdichterrad führt.

Von diesem Stand der Technik ausgehend liegt der Erfindung das Problem zugrunde, die Emissionen einer Brennkraftmaschine mit einem Verdichter mit einfachen Maßnahmen zu reduzieren.

Dieses Problem wird erfindungsgemäß bei einer Brennkraftmaschine mit den Merkmalen des Anspruches 1 und bei einem Verfahren zum Betrieb einer Brennkraftmaschine mit den Merkmalen des Anspruches 14 gelöst. Die abhängigen Ansprüche geben zweckmäßige Weiterbildungen an.

Erfindungsgemäß ist im Abgasstrang ein NOₓ-SpeicherKatalysator angeordnet, welcher zur NOₓ-Speicherung des Abgases ausgelegt ist. Zur Reduzierung der Stickoxide wird in regelmäßigen Abständen ein fetteres Luft-Kraftstoff-Gemisch mit relativem Kraftstoffüberschuss (λ<1) erzeugt, was im NOₓ-Speicher-Katalysator zu einer Reduzierung der Stickoxide führt. Die Einstellung des Luft-Kraftstoff-Verhältnisses mit relativem Kraftstoffüberschuss erfolgt bevorzugt über eine Reduzierung der Luftzufuhr auf der Luftseite der Brennkraftmaschine, wohingegen die Kraftstoffzufuhr zumindest annähernd konstant gehalten wird. Zur Absenkung der zugeführten Verbrennungsluft *verstellt eine Regel- und Steuereinheit* das *Sperrorgan* im *Verdichter in* eine die Luftzufuhr *reduzierende Position.* Zugleich wird die Dralleinrichtung in dem Zusatzkanal, welcher in den Verdichtereinlasskanal einmündet, durch die Regel- und Steuereinheit in eine Position verstellt, in der über den Zusatzkanal zuzuführende Verbrennungsluft das Verdichterrad mit einem antreibenden Drall beaufschlagt. In dieser Betriebsweise wird somit das Verdichterrad angetrieben, was auch als Kaltluft-Turbinenbetrieb des Verdichters bezeichnet werden kann. Ein Abfallen der Verdichterdrehzahl kann auf diese Weise trotz der luftreduzierenden Position des Sperrorgans verhindert werden.

Die erfindungsgemäße Brennkraftmaschine wird insbesondere mit einem Abgasturbolader ausgestattet, welcher eine Abgasturbine im Abgasstrang umfasst, die von den unter Druck stehenden Abgasen angetrieben wird, wobei die Rotation des Turbinenrades über eine Welle auf das Verdichterrad übertragen wird. Eine Reduzierung der Luftzufuhr für die Anfettung des Luft-Kraftstoff-Gemisches zum Abbau von Stickoxiden im Speicherkatalysator hat auch einen geringeren Abgasausstoß mit einem entsprechend verringerten Abgasgegendruck zur Folge, wodurch grundsätzlich die Laderdrehzahl abfällt. Dieser Abfall kann mittels der Drallbeaufschlagung des Verdichterrades zumindest teilweise kompensiert werden, so dass die Laderdrehzahl nicht oder nur unwesentlich abfällt. Bei einem nachfolgenden Beschleunigungsvorgang steht somit sofort die volle Laderleistung zur Verfügung.

Die Aufrechterhaltung der Laderdrehzahl bei reduzierter Luftzufuhr kann durch den Einsatz einer variablen Turbinengeometrie in der Abgasturbine unterstützt werden, über die der wirksame Turbineneintrittsquerschnitt veränderlich einstellbar ist. Bei reduzierter Luftzufuhr kann die variable Turbinengeometrie in eine den Querschnitt reduzierende Staustellung überführt werden, wodurch der Abgasgegendruck erhöht wird.

Die Dralleinrichtung im Zusatzkanal kann funktional mit dem Sperr- bzw. Drosselorgan im Verdichtereinlasskanal verbunden sein. Dies wird beispielsweise dadurch erreicht, dass eine Stellbewegung des Sperrorgans, über die der Strömungsquerschnitt im Verdichtereinlasskanal verän-, dert wird, auch eine Verstellung der Dralleinrichtung bewirkt, wodurch auch der Mündungsquerschnitt des Zusatzkanals in den Verdichtereinlasskanal verändert wird. Über die funktionale Kopplung von Sperrorgan und Dralleinrichtung reicht es aus, nur ein gemeinsames Stellglied zur Verstellung beider Bauteile vorzusehen.

Weitere Vorteile und zweckmäßige Ausführungen sind den weiteren Ansprüchen, der Figurenbeschreibung und den Zeichnungen zu entnehmen. Es zeigen:
- Fig. 1: eine schematische Darstellung einer Brennkraftmaschine mit Abgasturbolader und NOₓ-Speicher-Katalysator stromab der Abgasturbine,
- Fig. 2: einen Schnitt durch einen Verdichter mit einem Verdichterrad, dem über einen axialen Verdichtereinlasskanal und einen parallelen, in den Verdichtereinlasskanal einmündenden Zusatzkanal Verbrennungsluft zuführbar ist, dargestellt mit einem Sperrorgan im Verdichtereinlasskanal in Öffnungsposition und einer ebenfalls in Öffnungsposition stehenden Dralleinrichtung im Mündungsbereich des Zusatzkanals.

In den Figuren sind gleiche Bauteile mit gleichen Bezugszeichen versehen.

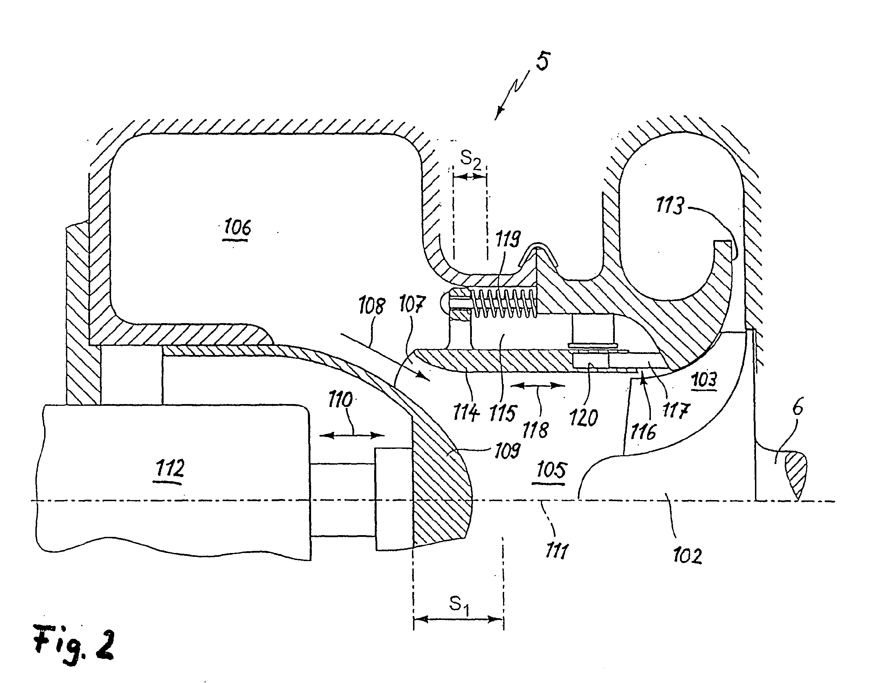

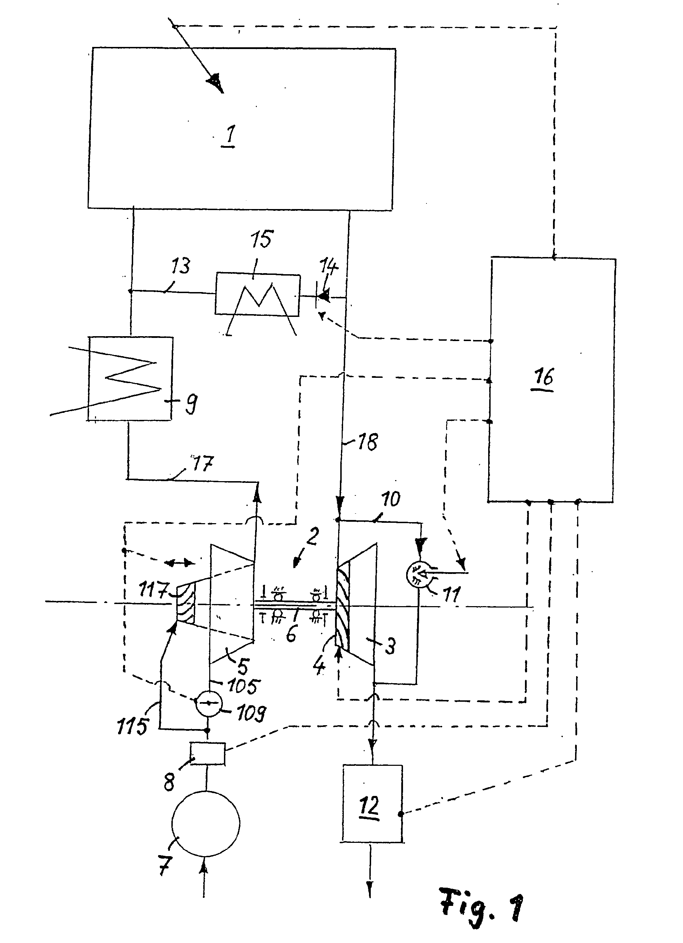

Der in Fig. 1 dargestellten Brennkraftmaschine 1 - ein Dieselmotor oder ein Ottomotor - ist ein Abgasturbolader 2 mit einer Abgasturbine 3 im Abgasstrang 18 und einem Verdichter 5 im Ansaugtrakt 17 zugeordnet. Das Turbinenrad der Abgasturbine 3 wird von den unter Abgasgegendruck stehenden Abgasen der Brennkraftmaschine 1 angetrieben. Über eine Welle 6 wird die Rotation des Turbinenrades auf das Verdichterrad übertragen, welches angesaugte Verbrennungsluft auf einen erhöhten Ladedruck verdichtet, die über den Ansaugtrakt 17 den Zylindern der Brennkraftmaschine zugeführt wird. Die Abgasturbine 3 kann mit einer variablen Turbinengeometrie 4 zur veränderlichen Einstellung des wirksamen Turbineneintrittsquerschnittes ausgestattet sein.

Der Verdichter 5 besitzt in seinem Verdichtergehäuse einen Verdichtereinlasskanal 105 sowie ein Sperrorgan 109, über das die zuzuführende Luftmenge reguliert werden kann. Des Weiteren ist der Verdichter 5 mit einem Zusatzkanal 115 ausgestattet, welcher sich etwa parallel zum Verdichtereinlasskanal 105 erstreckt und in Höhe des Verdichterrades über ein Drallgitter 117 in den Verdichtereinlasskanal 105 einmündet. Das Drallgitter 117 ist verner Staustellung verschoben. In dieser Konfiguration nimmt der Verdichter 5 die Funktion einer Kaltluftturbine ein, da der über den Zusatzkanal 115 zuzuführende Verbrennungsluftstrom aufgrund eines Druckgefälles zwischen Anström- und Abströmseite des Verdichters das Verdichterrad 102 antreibt und stromab des Verdichterrades 102 auf einen Unterdruck entspannt wird.

In Staustellung des Axialschiebers 114 ist das Sperrorgan 109 soweit in Richtung Verdichterrad 102 axial verschoben, dass der von dem Sperrorgan 109 beaufschlagte Axialschieber 114 gegen die Kraft des Federelementes 119 in seine Stauposition verstellt ist, in welcher der Querschnitt des Mündungsbereiches 116 auf ein Minimum reduziert oder gegebenenfalls völlig abgesperrt ist. Das Drallgitter 117 ist in Stauposition beinahe vollständig in der axialen Aufnahmeöffnung 120 im Axialschieber 114 aufgenommen. Durch den verbleibenden Spalt im Mündungsbereich 116 kann nur ein verhältnismäßig geringer Luftmassenstrom hindurchströmen, so dass das Verdichterrad 102 auch nur einen entsprechend geringen Drehimpuls erfährt. Zugleich ist die Eintrittsöffnung 107 zum Verdichtereinlasskanal 105 abgesperrt.

Bei einer Verschiebung des Sperrorgans 109 in Gegenrichtung - weg vom Verdichterrad 102 - wird zunächst der Axialschieber 114 unter dem Einfluss des Federelementes 119 aus der Stauposition in seine Öffnungsposition verschoben, wobei in dieser Phase die Eintrittsöffnung 107 zum Verdichtereinlasskanal 105 noch geschlossen bleibt. Im weiteren Verlauf wird nach dem Erreichen der Öffnungsposition des Axialschiebers 114, welche durch einen Anschlag gesichert sein kann, bei einem weiteren Verschiestellbar ausgeführt, derart, dass der Mündungsquerschnitt zwischen Zusatzkanal 115 und Verdichtereinlasskanal 105 im Hinblick auf seine Geometrie und/oder Querschnittsfläche verändert werden kann.

Dem Verdichter 5 ist im Ansaugtrakt 17 ein Luftfilter 7 und ein Luftmesser 8 vorgeschaltet. Stromab des Verdichters 5 wird die auf erhöhten Druck komprimierte Verbrennungsluft zunächst in einem Ladeluftkühler 9 gekühlt und anschließend unter Ladedruck den Zylindern der Brennkraftmaschine 1 zugeleitet.

Der Abgasturbine 3 ist ein Bypass zugeordnet, bestehend aus einer Bypassleitung 10, welche die Abgasturbine 3 überbrückt, sowie einem in der Bypassleitung 10 angeordneten, einstellbaren Bypassventil 11.

Stromab der Abgasturbine 3 ist im Abgasstrang 18 ein NOₓ-Speicher-Katalysator 12 angeordnet, in welchem Stickoxide gespeichert und in regelmäßigen Abständen über eine Anfettung des Luft-Kraftstoff-Gemisches reduziert werden. Darüber hinaus können im NOₓ-Speicher-Katalysator 12 auch weitere Schadstoffe ausgefiltert bzw. reduziert werden, insbesondere Rußpartikel.

Der Brennkraftmaschine 1 ist eine Abgasrückführeinrichtung zugeordnet, welche eine Rückführleitung 13 umfasst, die stromauf von der Abgasturbine 3 vom Abgasstrang 18 abzweigt und stromab des Luftladekühlers 9 in den Ansaugtrakt 17 einmündet und in der ein einstellbares Rückführventil 14 sowie ein dem Rückführventil nachgeordneter Abgaskühler 15 angeordnet sind.

Über eine Regel- und Steuereinheit 16 sind die einstellbaren Stellorgane der Brennkraftmaschine bzw. der zugeordneten Aggregate einzustellen. Insbesondere die Kraftstoffeinspritzung in die Zylinder der Brennkraftmaschine 1 kann über Stellsignale der Regel- und Steuereinheit 16 eingestellt werden, darüber hinaus auch die variable Turbinengeometrie 4, das Bypassventil 11, das Sperrorgan 109 des Verdichters 5 sowie das Drallgitter 117 und das Rückführventil 14 der Abgasrückeinrichtung.

Der in Fig. 2 dargestellte Verdichter 5, umfasst das im Verdichtergehäuse angeordnete Verdichterrad 102, das drehbar im Verdichtereinlasskanal 105 gelagert ist und über die Welle 6 von der zugeordneten Abgasturbine angetrieben wird. Die aus einem vorgelagerten, im Verdichtergehäuse angeordneten Luftsammelraum 106 über eine Eintrittsöffnung 107 in den axialen Verdichtereinlasskanal 105 gelangende Verbrennungsluft wird von den rotierenden Verdichterradschaufeln 103 auf einen erhöhten Ladedruck verdichtet und radial in einen Diffusor 113 im Verdichtergehäuse abgeleitet, von dem aus die komprimierte Verbrennungsluft zunächst im Ladeluftkühler gekühlt und anschließend unter Ladedruck in die Zylinder der Brennkraftmaschine geleitet wird. Die Rotationsachse des Verdichterrades 102 ist mit der Verdichterachse 111 identisch, die auch zugleich die Längsachse des Verdichtereinlasskanals 105 ist. Der vorgelagerte Luftsammelraum 106 ist als Ringraum ausgebildet und weist gegenüber der Verdichterachse 111 einen radialen Abstand auf. Die Eintrittsöffnung 107, welche Teil des Verdichtereinlasskanals 105 ist und über die die Verbrennungsluft aus dem Luftsammelraum 106 in Pfeilrichtung 108 in den Verdichtereinlasskanal 105 strömt, ist halbaxial ausgerichtet und schließt mit der Verdichterachse 111 einen Winkel ein.

Axial in Pfeilrichtung 110 verschieblich ist in dem Verdichtereinlasskanal 105 ein Sperrorgan 109 angeordnet, bei dessen axialer Bewegung der Querschnitt der Eintrittsöffnung 107 zwischen der in Fig. 2 dargestellten Öffnungsstellung und einer Schließstellung zu verschieben ist, in welcher die Eintrittsöffnung 107 vollständig abgesperrt ist und ein Übertritt von Verbrennungsluft aus dem Luftsammelraum 106 in den Verdichtereinlasskanal 105 unterbunden ist. Bei der Überführung von der Öffnungsposition bis zum Erreichen der Schließposition legt das Sperrorgan 109 einen axialen Stellweg s₁ zurück. Das Sperrorgan 109 wird mit Hilfe eines Stellgliedes 112 axial verschoben.

In Öffnungsstellung ist die Eintrittsöffnung 107 zwischen der Außenkontur des Sperrorgans 109 und einem Axialschieber 114 gebildet, der ebenfalls in Achsrichtung verschoben werden kann und einen axial verlaufenden, radial jedoch außerhalb des Verdichtereinlasskanals 105 verlaufenden Zusatzkanal 115 gegenüber dem Verdichtereinlasskanal abtrennt. Der Zusatzkanal 115 kommuniziert einenends ebenfalls mit dem Luftsammelraum 106 und mündet anderenends über einen Mündungsbereich 116 radial in Höhe des Verdichterrades 102 in den Verdichtereinlasskanal 105. Die über den Zusatzkanal 115 zugeführte Verbrennungsluft trifft näherungsweise radial auf die Verdichterradschaufeln 103 auf und beaufschlagt diese mit einem beschleunigenden Drall. Zur Verbesserung der Drallwirkung ist im Mündungsbereich 116 ein Drallgitter 117 angeordnet, welches beispielsweise über den Umfang des Drallgitters verteilte Leitschaufeln aufweist, die den Strömungsverlauf der auftreffenden Verbrennungsluft beeinflussen.

Axialschieber 114 und Drallgitter 117 bilden gemeinsam eine Dralleinrichtung, über die der Mündungsquerschnitt des Mündungsbereiches 116 zwischen der in Fig. 2 dargestellten Öffnungsposition und einer Stauposition zu verstellen ist, in welcher der Mündungsquerschnitt auf ein Minimum reduziert ist, gegebenenfalls auch vollständig abgesperrt ist. Die Verstellung des Mündungsquerschnittes erfolgt durch eine axiale Verschiebung des Axialschiebers 114 in Pfeilrichtung 118; der maximal mögliche Stellweg des Axialschiebers 114 bei der Überführung zwischen dessen Öffnungsposition und dessen Stauposition ist in Fig. 2 mit S₂ gekennzeichnet.

Der Axialschieber 114 ist am Verdichtergehäuse verschieblich gelagert und wird von einem Federelement 119 in seine Öffnungsstellung beaufschlagt. Zur Überführung aus der in Fig. 2 dargestellten Öffnungsstellung in die Staustellung wird der Axialschieber 114 entgegen der Federkraft des Federelementes 119 verschoben; hierbei wird das Drallgitter 117 in eine axiale Aufnahmeöffnung 120 im Axialschieber 114 eingeschoben.

Bei axialer Verstellung des Sperrorgans 109 in seine Schließstellung wird die Eintrittsöffnung 107 des Verdichtereinlasskanals 105 abgesperrt. Das Sperrorgan 109 ist als Sperrstempel ausgebildet, wobei in der Sperrstellung die Außenkontur des Sperrorgans die Außenkontur des Axialschiebers 114 berührt, so dass die Eintrittsöffnung 7 geschlossen ist. Der Axialschieber 114 befindet sich bei Annäherung des Sperrorgans 109 zunächst noch in seiner Öffnungsstellung und ist noch nicht in Richtung seiben des Sperrorgans 109 weg vom Verdichterrad 102 auch die Eintrittsöffnung 107 wieder geöffnet.

Zum Abbau der Stickoxide, welche im NOₓ-SpeicherKatalysator gespeichert sind, wird die Brennkraftmaschine in regelmäßigen Abständen mit einem angefetteten Luft-Kraftstoff-Gemisch befeuert, welches ein Luft-KraftstoffVerhältnis λ<1 aufweist. Dies wird bevorzugt durch eine Reduzierung der Luftzufuhr bei zumindest annähernd gleichbleibender Kraftstoffeinspritzung erreicht. Das Sperrorgan 109 wird in Schließstellung verstellt, so dass die Eintrittsöffnung 107 geschlossen ist und keine Verbrennungsluft über den Verdichtereinlasskanal 105 durch den Verdichter geschleust werden kann. Um einen Drehzahlabfall des Abgasturboladers zu verhindern, verbleibt der Axialschieber 114 in seiner Öffnungsposition, so dass auch der Mündungsbereich 116 mit dem darin angeordneten Drallgitter 117 geöffnet bleibt und über den Zusatzkanal 115 Verbrennungsluft auf das Verdichterrad 102 geleitet werden kann. Die zugeführte Verbrennungsluft beaufschlagt das Verdichterrad mit einem antreibenden Drall, wodurch die Laderdrehzahl zumindest annähernd aufrechterhalten werden kann.

## Patentansprüche

1. Brennkraftmaschine mit einem Verdichter im Ansaugtrakt, mit einem in einem Verdichtereinlasskanal (105) drehbar gelagerten Verdichterrad (102), über das zugeführte Verbrennungsluft auf einen erhöhten Ladedruck komprimierbar ist, und mit einem in den Verdichtereinlasskanal (105) einmündenden Zusatzkanal (115), wobei im Verdichtereinlasskanal (105) stromauf des Verdichterrades (102) ein einstellbares Sperrorgan (109) und im Mündungsbereich (116) des Zusatzkanals (115) in den Verdichtereinlasskanal (105) eine einstellbare Dralleinrichtung (114, 117) angeordnet ist und wobei eine Regel- und Steuereinheit (16) zur Verstellung des Sperrorgans (109) vorgesehen ist,
**dadurch gekennzeichnet,**
**dass** im Abgasstrang ein NOₓ-Speicher-Katalysator (12) angeordnet ist und dass die Regel- und Steuereinheit (16), zur Erzeugung eines Luft-Kraftstoff-Verhältnisses (λ) mit relativem Kraftstoffüberschuss, das Sperrorgan (109) in eine die Luftzufuhr reduzierende Position und zugleich die Dralleinrichtung (114, 117) in eine das Verdichterrad (102) mit einem antreibenden Drall beaufschlagende Position verstellt.

2. Brennkraftmaschine nach Anspruch 1,
**dadurch gekennzeichnet,**
**dass** der Verdichter (5) Bestandteil eines Abgasturboladers (2) mit einer Abgasturbine (3) im Abgasstrang (18) ist, wobei das Verdichterrad (102) mit dem Turbinenrad gekoppelt ist.

3. Brennkraftmaschine nach Anspruch 2,
**dadurch gekennzeichnet,**
**dass** die Abgasturbine (3) eine variable Turbinengeometrie (4) zur veränderlichen Einstellung des wirksamen Turbineneintrittsquerschnitts aufweist.

4. Brennkraftmaschine nach Anspruch 2 oder 3,
**dadurch gekennzeichnet,**
**dass** der NOₓ-Speicher-Katalysator (12) stromab der Abgasturbine (3) angeordnet ist.

5. Brennkraftmaschine nach einem der Ansprüche 1 bis 4,
**dadurch gekennzeichnet,**
**dass** das Sperrorgan (109) im Verdichter (5) die Dralleinrichtung (114, 117) beaufschlagt und eine Stellbewegung des Sperrorgans (109) eine Verstellung der Dralleinrichtung (114, 117) erzeugt.

6. Brennkraftmaschine nach Anspruch 5,
**dadurch gekennzeichnet,**
**dass** die Dralleinrichtung (114, 117) in einer ihrer Endstellungen federbeaufschlagt ist und das Sperrorgan (109) gegen die Federrichtung auf die Dralleinrichtung (114, 117) wirkt.

7. Brennkraftmaschine nach Anspruch 5 oder 6,
**dadurch gekennzeichnet,**
**dass** in einem ersten Bewegungsabschnitt der Stellbewegung ausschließlich das Sperrorgan (109) zu verstellen ist und in einem darauf folgenden zweiten Bewegungsabschnitt die Dralleinrichtung (114, 117) zu verstellen ist.

8. Brennkraftmaschine nach einem der Ansprüche 5 bis 7,
**dadurch gekennzeichnet,**
**dass** die Stellbewegung in Achsrichtung des Verdichterrades (102) verläuft.

9. Brennkraftmaschine nach einem der Ansprüche 5 bis 8,
**dadurch gekennzeichnet,**
**dass** die Dralleinrichtung einen Axialschieber (114) und ein Drallgitter (117) im Mündungsbereich (116) des Zusatzkanals (115) umfasst, wobei der Axialschieber (114) zwischen einer das Drallgitter (117) freigebenden Öffnungsstellung und einer den Mündungsquerschnitt reduzierenden Staustellung verstellbar ist.

10. Brennkraftmaschine nach Anspruch 9,
**dadurch gekennzeichnet,**
**dass** in den Axialschieber (114) eine axiale Aufnahmeöffnung (120) zur Aufnahme des Drallgitters (117) in Staustellung eingebracht ist.

11. Brennkraftmaschine nach Anspruch 9 oder 10,
**dadurch gekennzeichnet,**
**dass** der Axialschieber (114) über ein Federelement (119) in seine Öffnungsstellung beaufschlagt ist.

12. Brennkraftmaschine nach einem der Ansprüche 5 bis 11,
**dadurch gekennzeichnet,**
**dass** das Sperrorgan (109) einen axial verschieblichen Sperrstempel im Verdichtereinlasskanal umfasst, wobei über den Sperrstempel der Querschnitt einer Eintrittsöffnung (107) des Verdichtereinlasskanals (105) zwischen einer Öffnungs- und einer Schließposition veränderlich einstellbar ist.

13. Brennkraftmaschine nach einem der Ansprüche 9 bis 12,
**dadurch gekennzeichnet,**
**dass** der Axialschieber (114) einen Anschlag für das Sperrorgan (109) bildet, wobei das Sperrorgan (109) bei Erreichen der Schließposition der Eintrittsöffnung (107) zum Verdichtereinlasskanal (105) an den Axialschieber (114) anschlägt.

14. Verfahren zum Betrieb einer Brennkraftmaschine nach einem der Ansprüche 1 bis 13, bei dem zur Absenkung von NOₓ-Emissionen die Luftzufuhr zum Verdichterrad (102) reduziert und zugleich das Verdichterrad (102) mit einem antreibenden Drall beaufschlagt wird und die Kraftstoffzufuhr zumindest annähernd konstant gehalten wird.

## Claims

1. Internal combustion engine comprising a compressor in the suction part, with a compressor wheel (102) mounted so as to be rotatable in a compressor intake passage (105), via which the combustion air supplied can be compressed to an increased boost pressure, and with an additional passage (115) running into the compressor intake passage (105), wherein an adjustable shutoff element (109) is arranged in the compressor intake passage (105) upstream from the compressor wheel (102) and an adjustable swirl device (114, 117) is arranged in the transition area (116) between the additional passage (115) and the compressor intake passage (105), and wherein a closed-loop and open-loop control unit (16) is provided for adjusting the shutoff element (109),
**characterised in that**
a NOₓ storage catalyst (12) is arranged in the exhaust gas train and **in that**, in order to produce an air-fuel ratio (λ) with relative fuel excess, the closed-loop and open-loop control unit (16) adjusts the shutoff element (109) into a position reducing the air supply and at the same time adjusts the swirl device (114, 117) into a position impacting the compressor wheel (102) with a driving swirl.

2. Internal combustion engine according to claim 1,
**characterised in that**
the compressor (5) is a component of an exhaust gas turbo charger (2) with an exhaust gas turbine (3) in the exhaust gas train (18), whereby the compressor wheel (102) is coupled to the turbine wheel.

3. Internal combustion engine according to claim 2,
**characterised in that**
the exhaust gas turbine (3) has a variable geometry (4) for the variable adjustment of the effective turbine inlet cross-section.

4. Internal combustion engine according to claim 2 or 3,
**characterised in that** the NOₓ storage catalyst (12) is arranged downstream from the exhaust gas turbine (3).

5. Internal combustion engine according to one of the claims 1 to 4,
**characterised in that**
the shutoff element (109) in the compressor (5) impacts the swirl device (114, 117) and an adjusting movement of the shutoff element (109) produces an adjustment of the swirl device (114, 117).

6. Internal combustion engine according to claim 5,
**characterised in that**
the swirl device (114, 117) is spring-loaded in one of its end positions and the shutoff element (109) works against the spring direction onto the swirl device (114, 117).

7. Internal combustion engine according to claim 5 or 6,
**characterised in that**
in a first movement section of the adjusting movement exclusively the shutoff element (109) can be adjusted and
in a subsequent second movement section the swirl device (114, 117) can be adjusted.

8. Internal combustion engine according to claims 5 to
7,
**characterised in that**
the adjusting movement takes place in the axial direction of the compressor wheel (102).

9. Internal combustion engine according to one of the claims 5 to 8,
**characterised in that**
the swirl device comprises an axial slide (114) and a swirl grate (117) in the transition area (116) of the additional passage (115), whereby the axial slide (114) can be adjusted between an open position releasing the swirl grate (117) and a blocked position reducing the cross-section in the transition area.

10. Internal combustion engine according to claim 9,
**characterised in that**
an axial receiving opening (12) is arranged in the axial slide (114) to receive the swirl grate (117) in the blocked position.

11. Internal combustion engine according to claim 9 or 10,
**characterised in that**
the axial slide (14) is impacted by means of a spring element (119) into its open position.

12. Internal combustion engine according to one of the claims 5 to 11,
**characterised in that**
the shutoff element (109) comprises an axially displaceable shutoff member in the compressor intake passage, whereby the cross-section of an inlet opening (107) of the compressor intake passage (105) can be variably adjusted by means of the shutoff member between an open and a closed position.

13. Internal combustion engine according to one of the claims 9 to 12,
**characterised in that**
the axial slide (114) forms a stop for the shutoff element (109), whereby the shutoff element (109), upon the closed position of the inlet opening (107) to the compressor intake passage (105) being reached, stops against the axial slide (114).

14. Method for operating an internal combustion engine according to one of the claims 1 to 13, wherein the air supply to the compressor wheel (102) is reduced in order to reduce NOₓ emissions and at the same time the compressor wheel (102) is impacted with a driving swirl and the fuel supply is kept at least virtually constant.

## Revendications

1. Moteur à combustion interne, avec un compresseur dans le système d'aspiration, avec une roue à aubes de compresseur (102) logée en rotation dans le conduit d'admission du compresseur (105), par l'intermédiaire de laquelle l'air de combustion alimenté est susceptible d'être comprimé à une pression de charge élevée et avec un conduit auxiliaire (115) débouchant dans le conduit d'admission du compresseur (105), un organe de fermeture (109) réglable étant disposé dans la conduit d'admission du compresseur (105), en amont de la roue à aubes de compresseur (102) et un dispositif de giration réglable (114, 117) étant disposé dans la zone d'embouchure (116) du conduit auxiliaire (115), dans le conduit d'admission du compresseur (105) et une unité de réglage et de commande (16) étant prévue pour le déplacement de l'organe de fermeture (109),
**caractérisé en ce que**
dans le système des gaz d'échappement est disposé un catalyseur accumulateur de NOₓ (12) et **en ce que**, pour créer un rapport air/carburant (λ), avec un excédent relatif de carburant, l'unité de réglage et de commande (16), déplace l'organe de fermeture (109) dans une position réduisant l'alimentation d'air et simultanément le dispositif de giration (114, 117) dans une position soumettant la roue à aubes de compresseur (102) à une giration d'entraînement.

2. Moteur à combustion interne selon la revendication 1,
**caractérisé en ce que**
le compresseur (5) est un élément d'un turbocompresseur des gaz d'échappement (2), avec une turbine des gaz d'échappement (3) dans le système des gaz d'échappement (18), la roue à aubes de compresseur (102) étant accouplée sur la roue de turbine.

3. Moteur à combustion interne selon la revendication 2,
**caractérisé en ce que**
la turbine des gaz d'échappement (3) présente une géométrie de turbine variable (4), pour le réglable variable de la section transversale efficace d'entrée de la turbine.

4. Moteur à combustion interne selon la revendication 2 ou 3,
**caractérisé en ce que**
le catalyseur accumulateur de NOₓ (12) est disposé en aval de la turbine des gaz d'échappement (3).

5. Moteur à combustion interne selon l'une quelconque des revendications 1 bis 4,
**caractérisé en ce que**
l'organe de fermeture (109) dans le compresseur (5) sollicite le dispositif de giration (114, 117) et **en ce qu'**un déplacement de réglage de l'organe de fermeture (109) génère un réglage du dispositif de giration (114, 117).

6. Moteur à combustion interne selon la revendication 5,
**caractérisé en ce que**
dans l'une de ses positions finales, le dispositif de giration (114, 117) est soumis à un ressort et **en ce que** l'organe de fermeture (109) agit sur le dispositif de giration (114, 117), à l'encontre du sens du ressort.

7. Moteur à combustion interne selon la revendication 5 ou 6,
**caractérisé en ce que**
dans une première partie du déplacement de réglage, exclusivement l'organe de fermeture (109) doit être réglé, et dans la deuxième partie consécutive du déplacement, le dispositif de giration (114, 117) doit être réglé.

8. Moteur à combustion interne selon l'une quelconque des revendications 5 bis 7,
**caractérisé en ce que**
le déplacement de réglage se produit en direction axiale de la roue à aubes de compresseur (102).

9. Moteur à combustion interne selon l'une quelconque des revendications 5 bis 8,
**caractérisé en ce que**
le dispositif de giration comprend un coulisseau axial (114) et une grille de giration (117) dans la zone d'embouchure (116) du conduit auxiliaire (115), le coulisseau axial (114) étant réglable entre une position d'ouverture libérant la grille de giration (117) et une position de retenue, réduisant la section transversale de l'embouchure.

10. Moteur à combustion interne selon la revendication 9,
**caractérisé en ce que**
dans le coulisseau axial (114) est ménagé un orifice de logement (120), pour loger la grille de giration (117) en position de retenue.

11. Moteur à combustion interne selon la revendication 9 ou 10,
**caractérisé en ce que**
le coulisseau axial (114) est soumis dans sa position d'ouverture par un élément à ressort (119).

12. Moteur à combustion interne selon l'une quelconque des revendications 5 bis 11,
**caractérisé en ce que**
l'organe de fermeture (109) comprend un poinçon de fermeture déplaçable en direction axiale, dans le conduit d'entrée du compresseur, la section transversale d'un orifice d'admission (107) du conduit d'admission du compresseur (105) étant réglable de façon variable entre une position d'ouverture et une position de fermeture.

13. Moteur à combustion interne selon l'une quelconque des revendications 9 à 12, **caractérisé en ce que** le coulisseau axial (114) forme une butée pour l'organe de fermeture (109), à l'atteinte de la position de fermeture de l'orifice d'admission (107) vers le conduit d'admission du compresseur (105), l'organe de fermeture (109) butant sur le coulisseau axial (114).

14. Procédé pour le fonctionnement d'un moteur à combustion interne selon l'une quelconque des revendications 1 à 13, dans lequel, pour baisser les émissions de NOₓ l'alimentation d'air vers la roue à aubes de compresseur (102) est réduite et simultanément, la roue à aubes de compresseur (102) est soumise à une giration d'entraînement et l'alimentation de carburant est maintenue pratiquement constante.
